# Europäisches Patentamt

## European Patent Office
## Office européen des brevets

(19)

(11) Veröffentlichungsnummer: **0 123 089**
**B1**

(12) **EUROPÄISCHE PATENTSCHRIFT**

(45) Veröffentlichungstag der Patentschrift:
08.06.88

(51) Int. Cl.⁴: **G 21 C 17/06**, G 01 N 27/72

(21) Anmeldenummer: **84102596.8**

(22) Anmeldetag: **09.03.84**

(54) Verfahren zur Feststellung des Inhaltes eines Brennstabes.

(30) Priorität: **24.03.83 DE 3310755**

(43) Veröffentlichungstag der Anmeldung:
**31.10.84 Patentblatt 84/44**

(45) Bekanntmachung des Hinweises auf die Patenterteilung:
**08.06.88 Patentblatt 88/23**

(84) Benannte Vertragsstaaten:
**BE DE FR IT SE**

(56) Entgegenhaltungen:
**DE-A-2 643 664**
**DE-A-2 758 051**
**FR-A-2 433 181**
**GB-A-2 073 429**

(73) Patentinhaber: **Siemens Aktiengesellschaft Berlin und München, Wittelsbacherplatz 2, D-8000 München 2 (DE)**

(72) Erfinder: **Gradel, Gerhard, Dipl.- Ing., Lilienstrasse 23, D-8581 Eckersdorf (DE)**
Erfinder: **Dörr, Wolfgang, Dr., von- Weber- Strasse 51a, D-8522 Herzogenaurach (DE)**
Erfinder: **Wahode, Peter, Dipl.- Ing., Dina- Ernstberger- Strasse 30, D-8524 Neunkirchen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Feststellung des Inhaltes eines Brennstabes entsprechend dem Gattungsbegriff des Patentanspruchs 1.

Ein derartiges Verfahren ist aus der GB-A-2 073 429 bekannt. Bei diesem bekannten Verfahren wird die magnetische Suszeptibilität von Kernbrennstoff im in einem äußeren Magnetfeld befindlichen Brennstab durch Messen der Spannung bestimmt, die in der Prüfspule infolge der Bewegung dieses Brennstabes induziert wird. Insbesondere soll der Kernbrennstoff im Brennstab ferromagnetische Partikel enthalten.

Der Erfindung liegt die Aufgabe zugrunde, die Genauigkeit der Messung zur Feststellung des Inhaltes des Brennstabes zu verbessern.

Zur Lösung dieser Aufgabe hat das eingangs erwähnte Verfahren die Merkmale des kennzeichnenden Teiles des Patentanspruchs 1.

Das erfindungsgemäße Verfahren beruht auf der Feststellung, daß die Leitfähigkeit der Brennstofftabletten schon bei geringer Dotierungen sehr stark ansteigt und selbst geringe Leitfähigkeitsunterschiede mit einem ein elektrisch leitendes Rohr durchdringenden Magnetfeld meßbar sind: An der Prüfspule treten bei entsprechend niedriger Frequenz ausreichend große Impedanzunterschiede auf.

Vorzugsweise werden die Meßwerte von einem Schreibgerät abhängig von der Position der Prüfspule aufgezeichnet. Hierzu können die Meßwerte in einem Transientenrecorder digitalisiert und in dieser Form abgespeichert und ggf. gleichzeitig oder später von einem Rechner ausgewertet werden. Hierbei werden dann auch schnelle Meßwertänderungen - z. B. an den Tablettengrenzen - sichtbar, die von einem - zu trägen - Meßwertschreiber nicht mehr dargestellt werden. Das ermöglicht es dann, für die Durchlaufgeschwindigkeit des Brennstabes durch die Prüfspule einen praktischen Anforderungen entsprechenden hohen Wert - z. B. 10 cm/sec - zu wählen.

Im Ergebnis entsteht ein für den Inhalt eines Brennstabes typisches Profil. Dieses erlaubt nicht nur die Bestimmung der Dotierungskonzentration der Brennstofftabletten und damit die Unterscheidung von Tabletten unterschiedlicher Dotierung, selbst wenn der Unterschied nur 1 % beträgt. Darüber hinaus sind auch metallische Einschlüsse in den Tabletten, unerwünschte Abstände zwischen aufeinanderfolgenden Tabletten und deren Schiefstellung ebenso feststellbar wie die Lage von Strukturmaterial, beispielsweise von Federn oder Aluminiumoxid-Tabletten. Schließlich ist so auch die Länge der Tablettensäule meßbar.

Bei Beachtung der Strahlenschutzmaßnahmen kann die Erfindung selbstverständlich auch zur Ausmessung von bereits bestrahlten Brennstäben verwendet werden.

Die Erfindung bedient sich des bekannten Wirbelstromverfahrens und der zu dessen Durchführung bekannten Meßgeräte und Apparaturen. Bei diesem Verfahren wird die Änderung der Impedanz einer Prüfspule ausgewertet, wenn in diese ein Prüfling eingeführt wird. Die Änderung der Impedanz ist hierbei von Qualitätsmerkmalen des Prüflings, wie Materialfehler, Dimensionsabweichungen, abhängig. Hierbei war jedoch der Prüfling stets durchgehend aus Metall. Bei der Erfindung wird dagegen keramisches oder halbleitendes Material vermessen, das von einem elektrisch leitenden Metallrohr umgeben ist.

Wie in den bekannten Fällen kann auch bei der Erfindung der Absolutwert der Impedanz gemessen und angezeigt werden; eine höhere Empfindlichkeit ergibt sich jedoch mit einem Vergleichswertverfahren, bei dem die Differenz zwischen dem Meßwert des Prüflings und dem Meßwert eines Vergleichsgegenstandes ausgewertet wird. Der Vergleichsgegenstand ist vorzugsweise ein von einer Vergleichsspule umgebenes Rohr, das zweckmäßig mit einer Brennstofftablette gefüllt ist, wobei die Daten von Rohr und Brennstofftablette dieselben sind wie die Solldaten der zu vermessenden Brennstäbe. Die Vergleichsspule kann aber auch räumlich neben der Prüfspule den zu vermessenden Brennstab umgeben.

Vorzugsweise wird die Prüfspule - oder eine zusätzliche Hilfsspule - mit mindestens einer zusätzlichen Wechselspannung höherer Frequenz beaufschlagt und die dabei festgestellte Impedanz getrennt gemessen und ausgewertet. Auf diese Weise können bei entsprechender Wahl der Frequenzen andere Eigenschaften des Prüflings, wie beispielsweise Dicke, Exzentrizität und Homogenität der Wandung des Rohres des Brennstabes gleichzeitig gemessen werden.

Die Erfindung eignet sich besonders gut für eine automatisierte Prüfung, bei der das gemessene Profil der Prüflinge mit dem Sollprofil eines einwandfreien Brennstabes verglichen und vom Ergebnis dieses Vergleiches eine Weichenstellung für die Sortierung der Prüflinge gesteuert wird.

Ein Ausführungsbeispiel der Erfindung wird anhand der Figuren näher erläutert; es zeigen

FIG 1 eine Meßanordnung in schematischer Darstellung und

FIG 2 ein damit aufgenommenes Stabprofil.

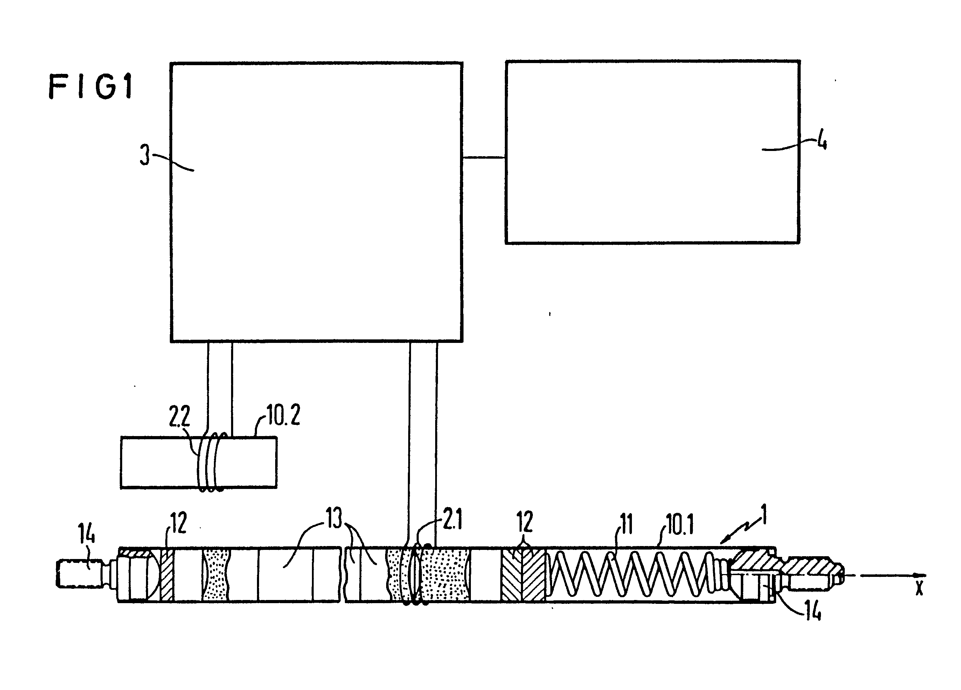

In FIG 1 ist ein Brennstab mit 1 und sein Hüllrohr mit 10.1 bezeichnet. In dem Hüllrohr sind zwischen zwei Abschlüssen 14 eine Feder 11, zwei Tabletten 12 aus Aluminiumoxid, 36 Brennstofftabletten 13 mit unterschiedlicher Dotierung und eine weitere Tablette 12 aus Aluminiumoxid angeordnet.

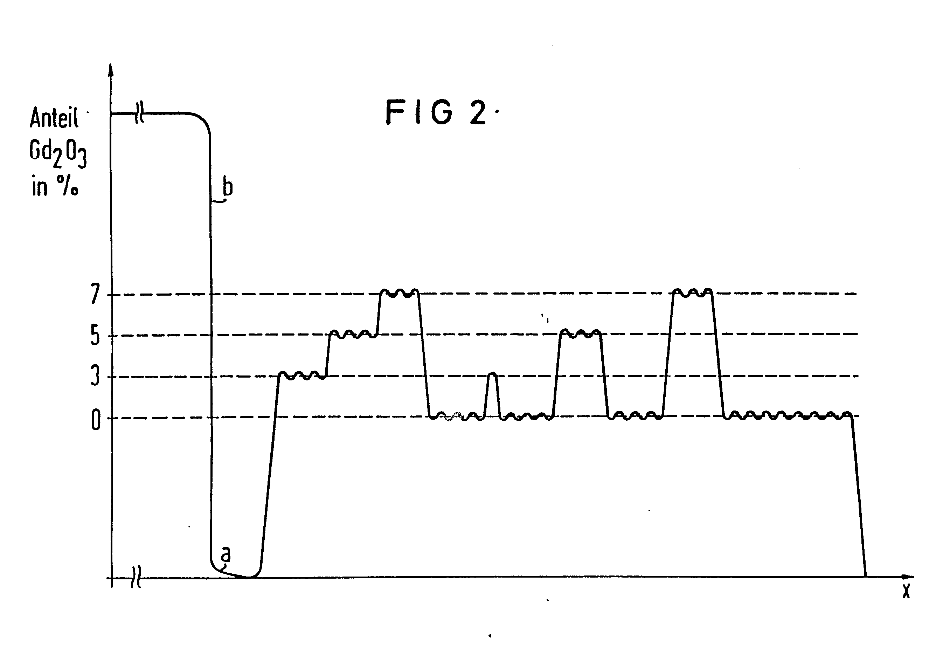

Dieser Brennstab wird in Richtung des Pfeiles x durch eine Prüfspule 2.1 hindurch bewegt, wobei die gemessenen Impedanzänderungen von einem Schreiber 4 gemäß FIG 2 aufgezeichnet werden. Dieser Schreiber wird von einem Wirbelstromprüfgerät 3 gesteuert, an das eine zusätzliche Vergleichsspule 2.2 angeschlossen ist, die ein leeres Vergleichsrohrstück 10.2 umschließt. Vergleichsspule und Prüfspule werden von dem Wirbelstromprüfgerät mit einer Wechselspannung entsprechend niedriger Frequenz gespeist und die Impedanzdifferenz zwischen Vergleichsspule und Prüfspule gemessen und nach entsprechender Verstärkung vom Schreibgerät 4 über der Länge x des Brennstabes aufgezeichnet:

In FIG 2 sind deutlich die einzelnen Brennstofftabletten erkennbar, da diese stirnseitig nicht vollflächig, sondern nur kreisringförmig aufeinanderstoßen: Jede Tablette ist daher durch eine Halbwelle abgebildet. Das Höhenniveau dieser Halbwellen ist darüber hinaus ein Maß für die Dotierung, hier für den $Gd_2O_3$-Gehalt - in Prozent - einer im übrigen aus $UO_2$ bestehenden Brennstofftablette. Dieses Profil ermöglicht es somit ohne weiteres, reine $UO_2$-Tabletten ($Gd_2O_3$-Anteil = 0 %) von dotierten Tabletten zu unterscheiden; bei entsprechender Eichung ist sogar der Dotierungsgrad meßbar. Ferner läßt das Profil auch die Lage von Strukturmaterial erkennen, wobei der Zweig a die beiden Aluminiumoxid-Tabletten 12 und der Zweig b die Feder 11 abbildet.

Die Frequenz der Wechselspannung an der Prüfspule liegt bei der Erfindung unter 10 kHz; bei den bekannten Wirbelstrommeßverfahren liegt sie dagegen gewöhnlich über 50 kHz. Bei einem Stabdurchmesser von 12,5 mm und einer Wandstärke von 0,95 mm des Hüllrohres hat sich vor allem eine Frequenz zwischen 6,6 und 7,5 kHz als besonders günstig erwiesen. Bei einem dünneren Stabdurchmesser von 9,7 mm und einer Wandstärke von 0,7 mm wurde mit 9 bis 9,5 kHz gearbeitet. Der Luftspalt zwischen den einzelnen Tabletten und dem Hüllrohr beträgt etwa 190 μm.

**Patentansprüche**

1. Verfahren zur Feststellung des Inhaltes eines Brennstabes (1) innerhalb eines sich in Längsrichtung des Brennstabes erstreckenden Prüfbereiches, wobei die Position (x) einer den Brennstab (1) konzentrisch umgebenden Prüfspule (2.1) von Beginn bis Ende des Prüfbereiches verändert wird, dadurch gekennzeichnet, daß dabei die Impedanz der Prüfspule (2.1) abhängig von ihrer Position (x) gemessen wird unter Anwendung eines Winkelstrommeßverfahrens, wobei die Prüfspule mit einer Wechselspannung gespeist wird, deren Frequenz unter 10 KHz liegt so daß sich der Meßwert im Bereich einer Brennstofftablette (13) aus reinem Urandioxid deutlich von dem unterscheidet, der im Bereich einer dotierten Brennstofftablette gemessen wird.

2. Verfahren nach Anspruch 1, dadurch gekennzeichnet, daß die Meßwerte von einem Schreibgerät (4) abhängig von der Position (x) der Prüfspule (2.1) in Form eines Meßprofiles aufgezeichnet werden.

3. Verfahren nach Anspruch 2, dadurch gekennzeichnet, daß das Meßprofil des zu prüfenden Brennstabes mit dem Sollprofil eines einwandfreien Brennstabes verglichen und abhängig vom Ergebnis dieses Vergleiches eine Weichenstellung für eine auf die Messung folgende Sortierung der Brennstäbe vorgenommen wird.

**Claims**

1. A method of determining the content of a fuel rod (1) within a test zone which extends in the longitudinal direction of the fuel rod, wherein the position (x) of a test coil (2.1), which concentrically surrounds the fuel rod (1), is varied from the beginning to the end of the test zone, characterised in that the impedance of the test coil (2.1) is measured in dependence upon its position (x) using an angular current measuring process, the test coil being supplied with an alternating voltage whose frequency is less than 10 KHz, so that the measured value in the region of a fuel tablet (13) made of pure uranium dioxide differs clearly from that measured in the region of a doped fuel tablet.

2. A method as claimed in Claim 1, characterised in that the measured values are recorded by a recording device (4) in dependence upon the position (x) of the test coil (2.1) in the form of a measurement curve.

3. A process as claimed in Claim 2, characterised in that the measurement curve of the fuel rod to be tested is compared with the theoretical curve of a satisfactory fuel rod and, depending on the result of this comparison, a switching position is set up for a sorting of the fuel rods which follows the measurement step.

**Revendications**

1. Procédé de détermination du contenu d'un crayon combustible (1) dans une zone d'examen s'étendant dans la direction longitudinale du crayon combustible, en modifiant la position (x) d'une bobine exploratrice (21) entourant concentriquement le crayon combustible (1) du début à la fin de la zone d'examen, caractérisé en ce qu'il consiste à mesurer, en utilisant un procédé de mesure par courants de Foucault, l'impédance de la bobine exploratrice (2.1) en fonction de sa position (x), la bobine exploratrice étant alimentée par une tension alternative de fréquence inférieure à 10 KHz de sorte que la valeur mesurée dans la zone d'une pastille de combustible nucléaire (13) en dioxyde d'uranium pur se distingue nettement de celle mesurée dans la zone d'une pastille de combustible nucléaire dopé.

2. Procédé suivant la revendication 1, caractérisé en ce qu'il consiste à enregistrer par un appareil enregistreur (4) les valeurs mesurées en fonction de la position (x) de la bobine exploratrice (2.1), sous la forme d'un profil de mesure.

3. Procédé suivant la revendication 2, caractérisé en ce qu'il consiste à comparer le profil de mesure du crayon combustible à examiner au profil de consigne d'un crayon combustible impeccable et, en fonction du résultat de cette comparaison, à effectuer un aiguillage pour un triage des crayons combustibles qui fait suite à la mesure.

FIG1

3

4

2.2    10.2

14    12    13    2.1    12    11    10.1    1

X

14

0 123 089

FIG 2

Anteil Gd₂O₃ in %